# EUROPÄISCHE PATENTANMELDUNG

(11) **EP 0 609 974 A2**
(43) Veröffentlichungstag der Anmeldung: **10.08.1994**
(21) Anmeldenummer: 94250017.4
(22) Anmeldetag: 01.02.1994
(51) Int. Cl.: G06F 3/06, G06F 1/18

(54) **Schreib-Lese-Einheit für elektronische Geräte**

(30) Priorität: 02.02.1993 DE 4303620
(71) Anmelder: MIPS MANAGEMENT INFORMATION SYSTEMS TECHNOLOGIES GmbH, D-65527 Niedernhausen (DE); ESD ELECTRONIC SYSTEMS DESIGN GmbH, D-12681 Berlin (DE)
(72) Erfinder: Villwock, Thomas, D-65527 Niedernhausen (DE); Gliem, Stefan, D-10115 Berlin (DE)
(74) Vertreter: Kietzmann, Manfred, Dipl.-Ing.

(57) **Zusammenfassung**

Schreib-Lese-Einheit (1) in Form eines kompakten Hybridlaufwerkes zur Kombination und alternativen Nutzung von mit Halbleitern bestückten steck- und auswechselbaren gekapselten Flachbaugruppen (IC-Karten) (3) und mit einem oder mehreren Laufwerken für rotierende Speichermedien (4), wie z.B. Disketten-, Festplatten-, Compactdisk- und magnetooptische Laufwerke, zum Anschluß an elektronische Geräte, wie elektronische Datenverarbeitungsanlagen, Drucker oder Steuerungen. Die Ansteuerung der Schreib-Lese-Einheit erfolgt über eine für die Speichermedien gemeinsame oder getrennte integrierte Elektronik (5). Vorhandene elektronische Geräte lassen sich ohne zusätzlichen Raumbedarf erweitern, um komplexe Datenverarbeitungsvorgänge , wie z.B. für die Datensicherheit, auf die IC-Karte zu verlagern und die zentrale Verarbeitungseinheit zu entlasten.

## Beschreibung

Die Erfindung betrifft eine Schreib-Lese-Einheit für elektronische Geräte mit Speichermedien, wie mit Halbleitern bestückte, steck- und auswechselbare, gekapselte Flachbaugruppen (IC-Karten) bzw. Speichermedien mit rotierenden Laufwerken, wie z.B. Disketten-, Festplatten-, Compactdisk- und magneto-optische Laufwerke, zum Anschluß an elektronische Geräte, wie elektronische Datenverarbeitungsanlagen, Drucker oder Steuerungen.

Es ist allgemein bekannt, Computer mit mehreren gleichen oder auch unterschiedlichen Laufwerken (Disketten, CD-ROM, Festplatten, IC-Karten) zu bestücken, zu denen ein zentraler Zugriff erfolgt. Jedes Laufwerk bzw. Speichermedium stellt dabei eine separate Baueinheit dar, die als Einschub oder auch als autarke Einheit ausgeführt ist und mit der zentralen Steuereinheit (CPU) einzeln verbunden wird. Ein Zugriff auf die Daten erfolgt separat über die Zentraleinheit (CPU). Der Nachteil dieser Lösungen besteht darin, daß die integrierende Nutzung und der Austausch von auf unterschiedlichen Speichermedien gespeicherten Daten und Informationen stets über die Zentraleinheit (CPU) erfolgt und dadurch viel Verarbeitungskapazität in der zentralen Steuereinheit (CPU) für andere Aufgaben verloren geht. Aus diesem Grund müssen Zusatzfunktionen, die im engen Zusammenhang mit der Datenspeicherung stehen, wie Datenverschlüsselung, Datenkompression, Fehlererkennung und -korrektur auf der zentralen Verarbeitungseinheit implementiert werden. Ein weiterer Nachteil der bekannten Lösungen besteht darin, daß für eine Erweiterung und Nachrüstung derartiger elektronischer Geräte mit neuen Speichermedien ein höherer Raumbedarf, ein größeres Gewicht und damit verbunden ein höherer Energie- und Materialeinsatz notwendig ist. Dies trifft insbesondere für den zusätzlichen Einsatz von IC-Karten zu, die in der Lage sind, große Datenmengen zu speichern.

In der US-Patentschrift 5 036 429 wird eine Schreib-Lese-Einheit in Verbindung mit einer elektronischen Einrichtung, z.B. Computer, beschrieben, die aus einer auswechselbaren Steckeinheit in Form einer IC-Karten-Aufnahmeeinrichtung zur Aufnahme mehrerer IC-Karten besteht und dadurch wahlweise auf eine oder mehrere IC-Karten zugegriffen werden kann. Der Nachteil dieser Erfindung besteht darin, daß sie sich auf eine Art von Speichermedien beschränkt.

Aufgabe der Erfindung ist es, elektronischen Geräten mit rotierenden Laufwerken ohne bauliche Erweiterungen die Nutzung von mit Halbleitern bestückten, steck- und auswechselbaren, gekapselten Flachbaugruppen (IC-Karten) zu ermöglichen und durch Funktionsverlagerung die Leistungsfähigkeit dieser elektronischen Geräten zu erhöhen.

Erfindungsgemäß wird die Aufgabe mit den Merkmalen des Patentanspruchs 1 gelöst, indem eine Schreib- Lese- Einheit in Form eines Hybridlaufwerkes zur Kombination und alternativen Nutzung von mit Halbleitern bestückten steck- und auswechselbaren gekapselten Flachbaugruppen (IC-Karten) mit einem oder mehreren Laufwerken für rotierende Speichermedien, wie z.B. Disketten-, Festplatten-, Compactdisk- und magneto-optische Laufwerke, zum Anschluß an elektronische Geräte, wie elektronische Datenverarbeitungsanlagen, Drukker oder Steuerungen, realisiert ist. Die Ansteuerung der Schreib-Lese-Einheit erfolgt über eine für die Speichermedien gemeinsame oder getrennte integrierte Elektronik.

In den Unteransprüchen sind vorteilhafte Ausgestaltungen beschrieben, die sich auf konstruktive Merkmale, die Verknüpfung der Schreib-Lese-Einheit mit dem elektronischen Gerät und die Datensicherheit beziehen.

Als Verbindungsmodule zwischen der Steuerelektronik für die Schreib-Lese-Einheit und der zentralen Steuereinheit (CPU) des elektronischen Gerätes sind alternativ gedruckte Schaltungsplatinen, Interfacekabel oder die Übertragung mit elektromagnetischen Wellen vorgesehen.
Für eine hohe Benutzerfreundlichkeit der Schreib-Lese-Einheit sorgt eine zweckmäßige Anordnung der wichtigsten Bedien- und Anzeigeelemente. Optoelektronische Anzeigen, wie z.B. Segmentanzeigen, LED-Anzeigen oder Flüssigkristallanzeigen dienen der Anzeige des Status oder des Betriebszustandes der Speichermedien in der Schreib-Lese-Einheit. An der Front- und/oder Rückseite sind Bedienelemente, wie z.B. Schalter und/oder Tasten, mechanische Auswurfeinrichtungen sowie elektromechanische Verschlußeinrichtungen vorgesehen. Letztere schützen die Schreib-Lese-Einheit gegen Umwelteinflüsse oder das unberechtigte Hinzufügen oder die Entnahme von rotierenden Speichermedien bzw. IC-Karten.

Durch die Kombination einer IC-Karte mit anderen Speichermedien ergibt sich eine vorteilhafte Anwendung der Erfindung für die Datensicherheit und/oder Zugriffssicherung, indem die IC-Karte einen Chiffrierchip enthält, der Teile oder alle Speicherbestände, die auf der Datenverarbeitungsanlage abgelegt sind, verschlüsselt bzw. entschlüsselt. Darüber hinaus kann die IC-Karte Funktionen übernehmen, die dazu dienen, einen unkontrollierten Datenaustausch zwischen verschiedenen Datenverarbeitungsanlagen zu verhindern, die Datenkapazität des rotierenden Speichermediums durch eine, durch die IC-Karte bedingte, Datenverdichtung zu erhöhen oder durch einen auf der IC-Karte gespeicherten Mechanismus, Fehler zu erkennen und zu korrigieren.

Durch ein auf der IC-Karte implementiertes besonderes Verfahren kann ein Schutz vor Programmen (Viren, Würmer, Trojanische Pferde) erreicht werden, die sich illegal auf der DV-Anlage installiert haben bzw. installiert werden, um ihre Funktionsweise zu beeinträchtigen. Der Boot-Sektor wird dabei resident auf der Karte gespeichert. Ein Umprogrammieren ist nur mit einem speziellen Verfahren möglich, nachdem ein von außen zugänglicher Schalter betätigt wurde. Zum Booten muß der Schalter zurückgeschaltet werden. Viren, die dann den Boot-Sektor verändern wollen, haben dazu keine Möglichkeit mehr, da ein hardwaremäßiger Schreibschutz besteht. Weiterhin wird für alle Dateien auf der Karte eine bestimmte Checksumme gespeichert. Programme, die diese Dateien verändern, werden so erkannt, da sich die Checksumme der Dateien verändert.

Obwohl hier nur einige Beispiele für derartige Funktionen der Anwendung der IC-Karte genannt wurden, erschließen sich einem Experten eine Vielzahl weiterer Möglichkeiten im Zusammenwirken der IC-Karte mit anderen Speichermedien.

Mit der Erfindung lassen sich auch vorhandene Laufwerkschächte in elektronischen Geräten mit zusätzlichen Speichermedien bestücken. So vergrößert sich ihre Leistungsfähigkeit ohne zusätzlichen Raumbedarf.

Die Erfindung wird anhand der in der Zeichnung näher dargestellten vorteilhaften Ausführungsbeispiele beschrieben.

Es zeigen:
- **Fig. 1**: Schreib-Lese-Einheit mit einem IC-Karten-Steckplatz, einem auswechselbaren, rotierenden Speichermedium und einer gemeinsamen Ansteuerelektronik als kompakten Einschub.
- **Fig. 2a**: Schreib-Lese-Einheit mit einem IC-Karten-Steckplatz, einem auswechselbaren, rotierenden Speichermedium und einem nach vorn auswechselbaren, fest installierten rotierenden Speichermedium (Festplatte).
- **Fig. 2b**: Schreib-Lese-Einheit mit einem IC-Karten-Steckplatz, einem auswechselbaren, rotierenden Speichermedium und einem nach hinten auswechselbaren, fest installierten rotierenden Speichermedium (Festplatte).
- **Fig. 3**: Schreib-Lese-Einheit mit einem IC-Karten-Steckplatz, einem auswechselbaren, rotierenden Speichermedium und einer getrennten Ansteuerelektronik.
- **Fig. 4**: Schreib-Lese-Einheit als autarke Baueinheit für den Anschluß an ein elektronisches Gerät.
- **Fig. 5**: Seiten- und Vorderansicht für den Einbau der Schreib-Lese-Einheit in das Chassis eines elektronischen Gerätes mit auf einer gedruckten Schaltung angeordneten Steckverbindern.
- **Fig. 6**: Vorderansicht der kompakten Schreib-Lese-Einheit mit den Bedien- und Anzeigeelementen.
- **Fig. 7**: IC-Karte mit einer möglichen Chiffrierfunktion zur Gewährleistung der Zugriffs- und Datensicherheit.

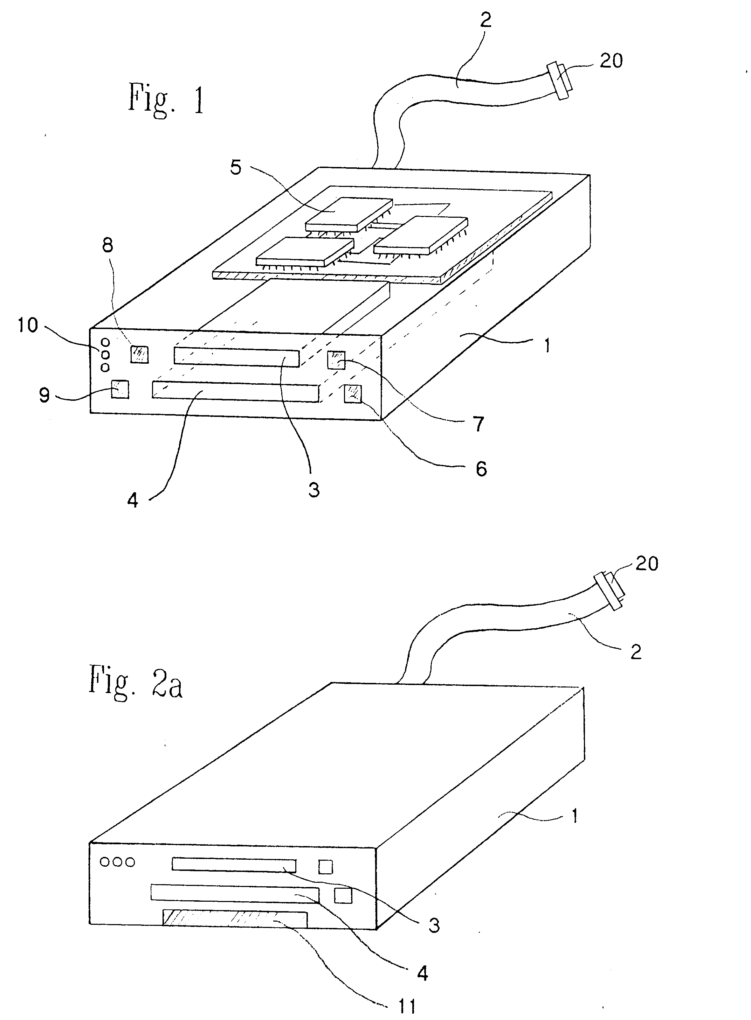

In **Fig. 1** ist eine kompakte Schreib-Lese-Einheit innerhalb eines Einbaugehäuses oder Rahmens **1** für den Einbau in ein elektronisches Gerät dargestellt. Die Verbindung zur Zentraleinheit des elektronischen Gerätes (nicht dargestellt) erfolgt über ein Interfacekabel **2** mit dem Steckverbinder **20**. An der Vorderseite der Schreib-Lese-Einheit befinden sich ein Steckplatz **3** als Aufnahmeeinheit für eine IC-Karte und ein Einsteckschacht **4** für ein Laufwerk eines auswechselbaren, rotierenden Speichermediums (Diskette). Im hinteren Teil des Rahmens **1** ist die gemeinsame Ansteuerelektronik **5** für die beiden Speichermedien angeordnet. An der Vorderfront sind außerdem die Bedien- und Anzeigeelemente zu sehen, wie z.B. die Auswurfeinrichtung **6** für das rotierende Laufwerk **4** und die Auswurfeinrichtung **7** für die IC-Karte **3**, eine Statusanzeige **8** für die IC-Karte **3**, eine Statusanzeige **9** für das rotierende Speichermedium **4** sowie Anzeigeleuchten **10** für den Betriebszustand für beide Speichermedien **3**,**4**.

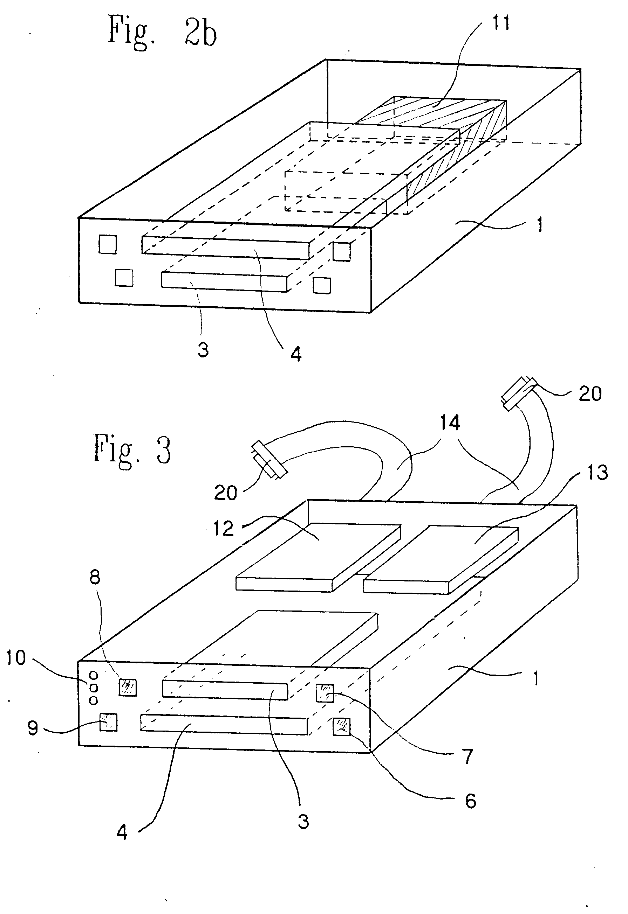

**Fig. 2a** und **2b** zeigen das Einbaugehäuse **1** mit der zusätzlichen Anordnung eines fest installierten, rotierenden Speichermediums (Festplatte) **11**, welches in **Fig. 2a** von der Frontseite und in **Fig. 2b** von der Rückseite zugänglich ist.

Das Einbaugehäuse **1** mit einer getrennten Anordnung der Ansteuerelektronik für die IC-Karte **12** und das rotierende Speichermedium **13** ist in **Fig. 3** dargestellt. Von beiden Ansteuerelektroniken **12**,**13** führen getrennt Interfacekabel **14** zur Zentraleinheit.

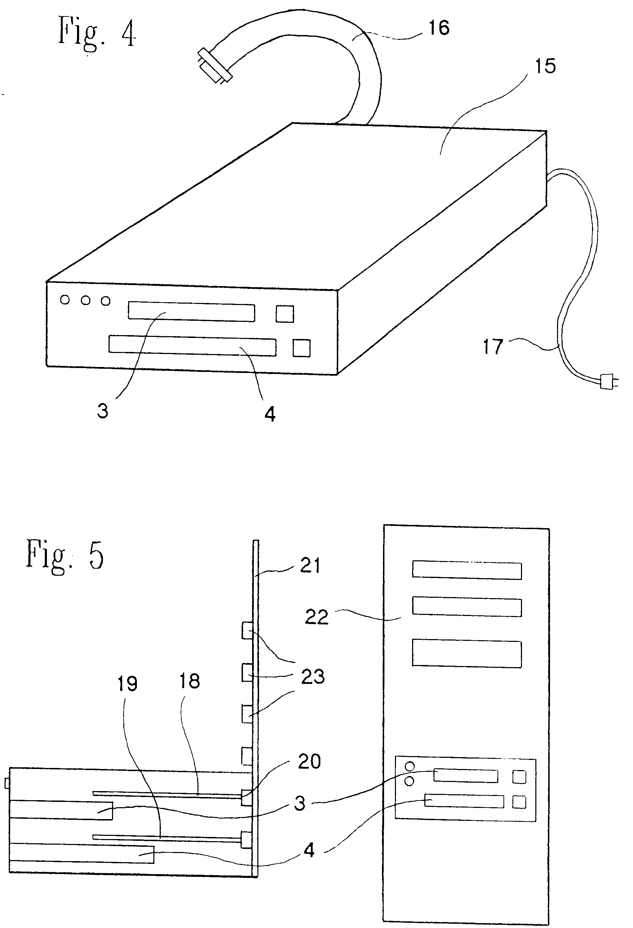

In **Fig. 4** ist die kompakte Schreib-Lese-Einheit als autarke Baueinheit in einem Gehäuse **15** für den separaten Anschluß an ein elektronisches Gerät mit Interface-Anschlußkabel **16** und separater Stromversorgung **17** untergebracht.

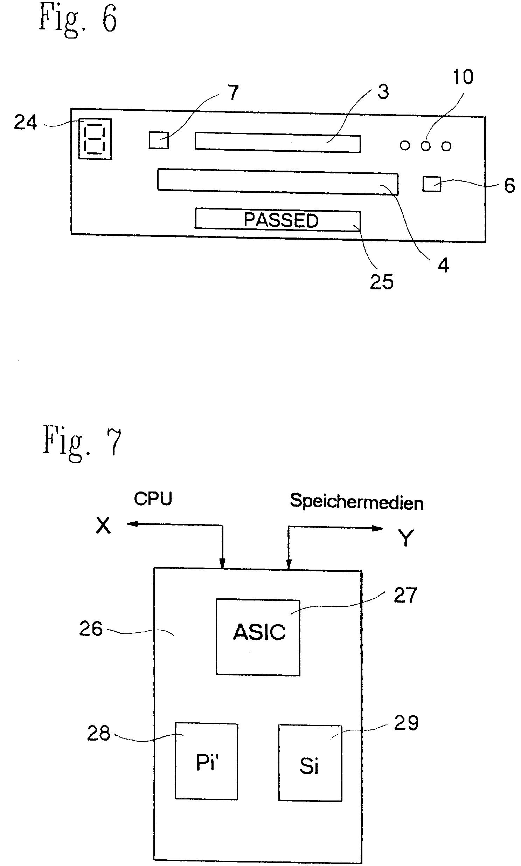

Die Möglichkeit des Einbaus einer erfindungsgemäßen Schreib-Lese-Einheit in ein Chassis des Gehäuses **22** des elektronischen Gerätes ist in **Fig. 5** dargestellt. Die IC-Karten-Steckplätze **3** und die rotierenden Speichermedien 4 sind mit ihren Ansteuerschaltungen **18**, **19** direkt über Steckverbinder **20** mit einer Leiterplatte **21** verbunden.

**Fig. 6** zeigt eine vorteilhafte Ausführungsform für die Anordnung der kompakten Schreib-Lese-Einheit mit den Bedien- und Anzeigeelementen an der Vorderfront des Gehäuses **1**. Neben dem Steckplatz **3** als Aufnahmeeinheit für eine IC-Karte und dem Einsteckschacht **4** für ein Laufwerk eines auswechselbaren, rotierenden Speichermediums (Diskette) sind in geeigneter Weise die Auswurfeinrichtung **6** für das rotierende Laufwerk **4**, die Auswurfeinrichtung **7** für die IC-Karte **3**, eine Statusanzeige **24** für die Speichermedien **3**,**4**, Anzeigeleuchten **10** für den Betriebszustand sowie eine LCD-Anzeige **25** für Betriebs- und Bedieninformationen vorgesehen.

Die Möglichkeit der Verwendung der IC-Karte **26** zur Gewährleistung der Zugriffs- und Datensicherheit der Speichermedien zeigt **Fig. 7**. Über einen fest verdrahteten Chiffrierchip (ASIC) **27** auf der IC-Karte **26**, auf dem ein Verschlüsselungsalgorithmus integriert ist, werden die Datenbestände **X**, die auf einem oder mehreren Speichermedien abgelegt werden, vor der Speicherung verschlüsselt als kodierter Dateibestand **Y** abgelegt und vor dem Laden der Datei in den Arbeitsspeicher (CPU) entschlüsselt. Der Verschlüsselungsalgorithmus, der auf dem Chiffrierchip **27** implementiert ist, enthält ein kodiertes Paßwort (Pi') **28** und einen benutzerabhängigen Geheimschlüssel (Si) **29**. Weder das kodierte Paßwort (Pi') **28**, der Geheimschlüssel (Si) **29** noch der Verschlüsselungsalgorithmus kann von der EDV-Anlage gelesen werden. Der Geheimschlüssel (Si) **29** ist dem Nutzer nicht bekannt. Nach dem Systemstart wird ein nur dem Nutzer bekanntes Paßwort (Pi) abgefragt und mit dem auf der IC-Karte gespeicherten, dekodierten Paßwort (Pi') **28** verglichen. Nur bei einer Übereinstimmung wird dem Nutzer der Zugang zur EDV-Anlage erlaubt.

Mit der erfindungsgemäßen Schreib-Lese-Einheit ist es erstmals möglich, in vorhandene Computer ohne zusätzlichen Raumbedarf Laufwerke mit steck- und auswechselbaren Flachbaugruppen (IC-Karten) zu integrieren und somit komplexe Datenverarbeitungsvorgänge, wie z.B. für die Datensicherheit, ohne Beanspruchung der zentralen Verarbeitungseinheit durchzuführen.

## Patentansprüche

1. Schreib-Lese-Einheit für elektronische Geräte mit mehreren Speichermedien, **dadurch gekennzeichnet, daß** die Schreib-Lese-Einheit aus einem Gehäuse (1) besteht, indem ein oder mehrere Laufwerke für rotierende Speichermedien (4) und eine oder mehrere Aufnahmeeinheiten für Speichermedien (3) in Form steck- und auswechselbarer, gekapselter Flachbaugruppen, vorzugsweise IC-Karten, vereinigt sind, eine Steuerelektronik (5,12, 13,18,19) zur gemeinsamen oder getrennten Ansteuerung der Speichermedien (3,4) angeordnet ist und mindestens ein Verbindungsmodul für die Verbindung der Steuerelektronik (5,12,13,18,19) mit der Zentraleinheit (CPU) des elektronischen Gerätes vorhanden ist.

2. Schreib-Lese-Einheit nach Anspruch 1, **dadurch gekennzeichnet, daß** das Gehäuse (1) mit mehreren an der Frontseite angebrachten optoelektronischen Anzeigen versehen ist und Schalter und/oder Tasten, mechanische Auswurfeinrichtungen (6,7), elektromechanische Verschlußeinrichtungen an der Front- und/oder Rückseite angeordnet sind.

3. Schreib-Lese-Einheit nach Anspruch 1, **dadurch gekennzeichnet, daß** das Gehäuse (1) der Schreib-Lese-Einheit mechanisch in einem Einbauschacht des elektronischen Gerätes (22) integriert oder außerhalb des elektronischen Gerätes (22) angeordnet ist.

4. Schreib-Lese-Einheit nach Anspruch 1, **dadurch gekennzeichnet, daß** die Steuerelektronik (5,12,13,18,19) als fest verdrahtete Steuerung ausgeführt ist oder aus Bausteinen besteht, die mit einem programmierbaren Mikrocode gesteuert werden.

5. Schreib-Lese-Einheit nach Anspruch 1, **dadurch gekennzeichnet, daß** der Verbindungsmodul aus einer gedruckten Schaltung (21) mit einer oder mehrerer Anschlußstellen (23) für die Verbindung mit der Ansteuerelektronik (5,12,13,18,19) besteht und für jede Anschlußstelle (23) mindestens ein Steckverbinder (20) zur Verfügung steht.

6. Schreib-Lese-Einheit nach Anspruch 1, **dadurch gekennzeichnet, daß** der Verbindungsmodul ein mehrpoliges Verbindungskabel (2,14,16) je Ansteuerelektronik (5, 12,13,18,19) ist und jeweils an den Enden des Verbindungskabels (2,14,16) Verbindungsstecker (20) angebracht sind.

7. Schreib-Lese-Einheit nach Anspruch 1, **dadurch gekennzeichnet, daß** die Schreib-Lese-Einheit eine von dem elektronischen Gerät unabhängige Stromversorgung (17) besitzt.

8. Schreib-Lese-Einheit nach Anspruch 1 und 7, **dadurch gekennzeichnet, daß** der Verbindungsmodul eine drahtlose Verbindung ist, wobei der Datenaustausch durch modulierte elektromagnetische Wellen erfolgt.

9. Schreib-Lese-Einheit nach Anspruch 1, **dadurch gekennzeichnet, daß** zwischen den Speichermedien (3,4) und der Zentraleinheit (CPU) ein Chiffrierchip (27) auf der IC-Karte (26) integriert ist.

10. Schreib-Lese-Einheit nach Anspruch 2, **dadurch gekennzeichnet, daß** die optoelektronischen Anzeigen Segmentanzeigen (8,9,24), LED-Anzeigen (10) und/oder Flüssigkristallanzeigen (25) sind.
